(19) Europäisches Patentamt
European Patent Office
Office européen des brevets

(11) EP 0 970 025 B1

# (12) FASCICULE DE BREVET EUROPEEN

(45) Date de publication et mention de la délivrance du brevet:
**25.07.2001 Bulletin 2001/30**

(21) Numéro de dépôt: **98906990.1**

(22) Date de dépôt: **06.02.1998**

(51) Int Cl.[7]: **C03C 17/34**, G02B 1/10, G02B 1/11

(86) Numéro de dépôt international:
**PCT/FR98/00230**

(87) Numéro de publication internationale:
**WO 98/34884 (13.08.1998 Gazette 1998/32)**

## (54) PROCEDE DE PREPARATION D'UN MATERIAU OPTIQUE MULTICOUCHES AVEC RETICULATION-DENSIFICATION PAR INSOLATION AUX RAYONS ULTRAVIOLETS ET MATERIAU OPTIQUE AINSI PREPARE

VERFAHREN ZUR HERSTELLUNG EINES MEHRSCHICHTIGEN OPTISCHEN GEGENSTANDS MIT VERNETZUNGS-VERDICHTUNG DURCH BELICHTUNG MIT UV-STRAHLUNG UND SO ERHALTENER OPTISCHER GEGENSTAND

METHOD FOR PREPARING A MULTILAYER OPTICAL MATERIAL WITH CROSSLINKING-DENSIFYING BY ULTRAVIOLET RADIATION AND RESULTING OPTICAL MATERIAL

(84) Etats contractants désignés:
**DE ES FR GB IT NL**

(30) Priorité: **10.02.1997 FR 9701484**

(43) Date de publication de la demande:
**12.01.2000 Bulletin 2000/02**

(73) Titulaire: **Commissariat à l'Energie Atomique
75008 Paris (FR)**

(72) Inventeurs:
- **BELLEVILLE, Philippe
F-92400 Courbevoie (FR)**
- **PRENE, Philippe
F-75011 Paris (FR)**

(74) Mandataire: **Des Termes, Monique et al
Société Brevatome
3, rue du Docteur Lancereaux
75008 Paris (FR)**

(56) Documents cités:
**EP-A- 0 492 785**
**EP-A- 0 515 848**
**FR-A- 2 680 583**
**FR-A- 2 682 486**

- **PATENT ABSTRACTS OF JAPAN vol. 095, no. 003, 28 avril 1995 & JP 06 345488 A (ASAHI GLASS CO LTD), 20 décembre 1994,**
- **PATENT ABSTRACTS OF JAPAN vol. 018, no. 004 (C-1149), 6 janvier 1994 & JP 05 247657 A (NISSHA PRINTING CO LTD), 24 septembre 1993,**
- **PATENT ABSTRACTS OF JAPAN vol. 095, no. 006, 31 juillet 1995 & JP 07 062323 A (ASAHI GLASS CO LTD), 7 mars 1995,**
- **DATABASE WPI Section Ch, Week 9346 Derwent Publications Ltd., London, GB; Class E12, AN 93-364968 XP002047221 & JP 05 270 864 A (ASAHI GLASS CO LTD) , 19 octobre 1993**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 970 025 B1

Printed by Jouve, 75001 PARIS (FR)

## Description

L'invention concerne un procédé de préparation d'un matériau optique par dépôt sur un substrat d'au moins deux couches de matériau polymérique inorganique, chacune de ces couches étant à base d'au moins un oxyde de métal ou de métalloïde, les couches déposées étant densifiées réticulées par une insolation aux rayons ultraviolets.

L'invention concerne également le matériau optique qui peut-être préparé par ce procédé.

Les matériaux optiques qui peuvent être préparés par un tel procédé sont en particulier des matériaux multicouches tels que des matériaux antireflets et des matériaux réfléchissants.

Les matériaux antireflets et les matériaux réfléchissants sont composés d'un substrat organique ou inorganique, recouvert de plusieurs couches dont certaines présentent des propriétés optiques spécifiques recherchées.

Plus précisément, les miroirs diélectriques interférentiels comprennent un substrat, recouvert d'un film diélectrique qui réfléchit une ou plusieurs longueurs d'ondes souhaitées, tout en présentant une absorption intrinsèque relativement faible comparativement aux métaux classiquement utilisés pour la réalisation de miroirs.

Les matériaux antireflets ou réfléchissants présentent une multitude d'applications.

Ainsi les substrats organiques ou inorganiques, c'est à dire notamment les plastiques ou les substrats vitreux, revêtus d'un film antireflet présentent un intérêt tout particulier dans les domaines suivants: les produits ophtalmiques et vidéo ou les applications architecturales comme les panneaux vitrés placés à l'extérieur ou à l'intérieur des bâtiments.

En outre, les matériaux antireflets et les miroirs diélectriques interférentiels peuvent également être utilisés dans les lasers de forte énergie, les applications solaires, thermiques et photovoltaique ou encore dans les systèmes optiques intégrés.

On connaît déjà d'après l'art antérieur, des procédés permettant de réaliser ces matériaux antireflets ou des miroirs diélectriques interférentiels. Ces procédés sont mentionnés ci-après.

Par ailleurs, si dans le secteur ophtalmique, les plastiques tels que les polycarbonates, les polyacrylates, les polyallylcarbonates et autres, sont particulièrement intéressants, les substrats vitreux sont également intéressants, notamment dans le domaine de l'optique générale et dans le domaine des écrans tels que les écrans de visualisation.

Or, on comprend facilement qu'à raison d'environ 4% de perte en réflexion pour chaque interface air-verre rencontrée, l'indice moyen du verre étant de 1,5, le bilan des pertes pour un système optique complexe est souvent lourd.

En conséquence, les opticiens ont depuis longtemps cherché à créer des revêtements à propriétés optiques et notamment des films antireflets, grâce à des procédés physiques de dépôts sous vide, regroupées sous la dénomination de technologie PVD (Physical Vapor Deposition).

Parmi ces méthodes, on compte la pulvérisation simple ou réactive, l'évaporation simple ou réactive par chauffage électronique ou ionique avec ou sans assistance, etc...

En dépit de l'excellente qualité optique, chimique et mécanique des dépôts, ces techniques nécessitent des équipements sophistiqués lourds et coûteux et les procédés sont plutôt longs. Ceci est d'autant plus vrai que la surface des composants à traiter devient importante. Il en résulte que de tels procédés sont généralement mal adaptés à la production de séries bon marchés.

Par exemple, seuls les écrans de tube cathodique pour téléviseurs très haut de gamme sont à l'heure actuelle munis de revêtements antireflets appliqués par « PVD ».

C'est la raison pour laquelle les procédés de dépôt par voie chimique douce et en particulier les procédés de dépôts par voie sol-gel apparaissent comme une alternative intéressante aux procédés physiques de dépôt sous vide.

Le procédé de dépôt par voie sol-gel permet l'élaboration de films disposés sur des substrats et présentant des propriétés optiques diverses. Un tel procédé présente par rapport aux procédés classiques de dépôt sous vide un certain nombre d'avantages parmi lesquels on peut notamment mentionner, un dépôt généralement réalisé à température ambiante et à pression atmosphérique sans avoir recours à une étape thermique à des températures trop élevées, un capital équipement réduit, et une mise en oeuvre simple, rapide, du procédé, permettant ainsi une grande souplesse d'utilisation.

Les dépôts d'oxydes métalliques ou non métalliques à propriétés optiques par procédé sol-gel ont été très largement étudiés. Il apparaît que les systèmes ou procédés sol-gel peuvent être classés en deux catégories: les procédés ou systèmes polymériques et les procédés ou systèmes colloïdaux.

Chaque système nécessite différentes préparations et conditions opératoires qui dépendent des propriétés des solutions traitantes désirées et de la nature de l'oxyde concerné.

Le système polymérique consiste à utiliser comme précurseurs, des espèces monomériques, oligomériques ou de bas poids moléculaire, mises en solution, avec une bonne homogénéité moléculaire et qui sont ensuite converties en oxyde, après application sur le substrat, par une étape de cuisson. Le liquide déposé change éventuellement de viscosité au fur et à mesure de l'évaporation du solvant jusqu'à former un gel sur le substrat. Le réseau solide obtenu encore gorgé de solvant est ensuite transformé en oxyde en chauffant le système généralement à des températures élevées jusqu'à 500°C. On obtient alors une couche dense et dure, adhérant fortement au substrat. La conversion en

oxyde s'accompagne généralement d'une forte perte de masse constituée d'eau et de matières organiques entraînant une diminution importante l'épaisseur de la couche. Ceci induit de fortes contraintes internes, tensives ou compressives, dans le dépôt qui peuvent provoquer le faïençage du revêtement dans le cas de films mono- ou multi-composants épais, c'est à dire dont l'épaisseur est supérieure à quelques μm.

Par exemple, les brevets allemands DE-A-736 411 et DE-A-937 913 mentionnent l'emploi de composés hydrolysables pour la préparation de films interférentiels divers. L'inconvénient majeur de ces procédés réside dans l'indispensable traitement thermique entre 500 et 600°C pour convertir les intermédiaires polymériques en céramiques finales denses. Ces températures élevées limitent le choix de la nature du substrat à revêtir et compliquent la mise en oeuvre industrielle.

Le brevet US-A-2 466 119 décrit un procédé de préparation de films réfléchissants et/ou antireflets multicouches, par hydrolyse et condensation de mélanges d'halogénures de titane et/ou d'alcoxydes de silicium. Le contrôle de la porosité de ces couches s'effectue en faisant varier la température. Toutefois, l'obtention de couches présentant une bonne résistance mécanique nécessite le chauffage à des températures très supérieures à celle que peuvent supporter les plastiques usuels dont la stabilité thermique est généralement de 150°C au maximum.

Le brevet US 2 584 905 traite de la préparation de couches minces réfléchissantes à partir de solutions alcooliques de $TiCl_4$ et d'un alcoxyde de silicium. Là encore, il est nécessaire de recourir à une étape de traitement thermique à haute température permettant de densifier de façon convenable les oxydes. Dans ce procédé, les problèmes de faïençage et d'écaillage liés à la densification des matériaux, réduisent considérablement l'élaboration d'édifices multicouches à haute réflexion.

Le brevet US 3 460 956 décrit la préparation de films réfléchissants en $TiO_2$ à partir d'hydrolysats de tétraalkyle titanates, en milieu alcoolique. Toutefois, pour une conversion efficace en oxyde dense, du film polymérique, ce dernier doit subir un chauffage à température élevée, aux environs de 500°C, donc pénalisant et préjudiciable pour tout substrat organique.

Les brevets US 2 768 909 et 2 710 267 décrivent la production de films réfléchissants en $TiO_2$ à partir de sols alcooliques d'un alcoxyde de titane, ces sols étant hydrolysables par l'humidité atmosphérique. Cette approche requiert également une forte cuisson des intermédiaires condensés et les couches obtenues ne sont pas résistantes à l'abrasion.

Le brevet US 4 272 588 concerne la possibilité d'accroître la réflectivité de miroirs en métaux nobles ainsi que la possibilité de rendre chimiquement passif ces derniers, par le dépôt de couches de diélectriques $TiO_2$ et $Ta_2O_5$ issus de précurseurs moléculaires.

De tels revêtements sont obtenus par un chauffage obligatoire aux environs de 400°C.

Ainsi, on utilise généralement comme matériau polymérique pour les couches minces optiques d'indice de réfraction élevé (compris par exemple entre 1,9 et 2,1) l'oxyde de titane ($TiO_2$). Cependant, pour obtenir des couches mécaniquement résistantes à l'abrasion, la densification doit être effectuée à haute température voisine de 400 °C, ce qui n'est pas envisageable par exemple pour des substrats plastiques.

Le document US-A-4 328 260 décrit un procédé et une composition pour appliquer un traitement antireflet et une grille sur des cellules solaires qui comprend l'application d'un masque sur la surface de la cellule, l'application d'une pâte d'alcoxyde de métal (Ta ,Ti, Nb ,Y ,Zr ,Te ) sur le masque, et le chauffage de la cellule à une température de 300 °C à 550°C pour décomposer l'alcoxyde et former l'oxyde métallique.

Les surfaces restantes sont plaquées avec du nickel pour former une grille métallique. L'application à la fois d'un revêtement antireflet et d'une grille font que les problèmes qui se posent dans ce document sont fondamentalement différents de ceux de la présente demande, de plus les températures mises en oeuvre pour conduire à l'oxyde métallique sont très élevées et incompatibles avec un substrat tel qu'un substrat organique, en outre, l'application d'une pâte sur un substrat ne permet pas un contrôle précis de l'épaisseur déposée.

Le document JP-A-55 010455 est relatif à la préparation d'un revêtement antireflet sur un substrat de silicium par dépôt d'un mélange d'alcoxyde de tantale et d'un complexant tel que l'acide acétique et chauffage à une température de 200 à 800°C.

Cependant, un tel procédé présente l'inconvénient que la stabilité des solutions d'alcoxydes est très réduite, leur prix élevé, et que les températures mises en oeuvre ne conviennent pas pour tous les substrats.

Le brevet EP-A-0 533 030 est relatif à un procédé et à un appareil pour former un revêtement antireflet monocouche sur un tube cathodique en appliquant une solution aqueuse d'un alcoxyde métallique en particulier de silicium, et en irradiant cette solution par de la lumière ultraviolette afin de la durcir.

Le document de S.MAEKAWA et al. « Evaluation of $SiO_2$ thin films prepared by sol-gel method using photoirradiation », Journal of Non— Crystalline Solids, 169, (1994), 207-209, est relatif à la préparation de couches minces en $SiO_2$ par un procédé sol-gel dans lequel une solution de précurseur de $SiO_2$ telle qu'une solution de TEOS (tétraéthosixylane) dans un mélange eau, acide nitrique et éthanol est déposé sur des substrats en quartz ou en silice.

Certains substrats subissent un chauffage à 80-200°C puis sont irradiés simultanément par deux types de rayons ultraviolets à des longueurs d'onde de 184 nm et 254 nm et sont ensuite de nouveau chauffés. Il n'est question

dans ce document que de revêtements monocouches et l'obtention de couches minces dures et denses nécessite outre le traitement par les UV, deux traitements thermiques.

Le document de R.E. Van de LEEST « UV photoannealing of thin sol-gel films » Applied Surface Science 86 (1995) décrit le recuit-densification à basse température (100°C) de couches minces polymériques obtenues par la technique sol-gel à partir de solutions d'alcoxydes de Ti ou de Si au moyen d'une insolation par les rayons ultraviolets.

Les revêtements préparés sont exclusivement monocouches.

Le document de T.J.REHG et al. « Sol gel derived tantalum pentoxide films as ultraviolet antireflective coating for silicon », Applied Optics, 15.12.1989, Vol.28, N.24, p 5215-, décrit un procédé de préparation de revêtements antireflets sur du silicium par dépôt d'une solution de pentaéthoxyde de tantale et traitement thermique à une température de 300 à 1000°C.

Le document de T.OHISHI et al. « Synthesis and properties of Tantalum oxide films prepared by the sol-gel method using photo-irradiation », Journal of Non-crystalline Solids, 147, 148 (1992) 493-498 décrit la préparation de couches minces diélectriques de $Ta_2O_5$ à partir de solutions d'éthoxyde de tantale préalablement irradiées par des rayons ultraviolets à une longueur d'onde de 254 nm et exposition des couches minces à température ambiante à des rayons ultra-violets à une longueur d'onde de 184 nm.

Les inconvénients d'un tel procédé sont liées à l'utilisation d'alcoxyde de tantale en tant que précurseur, et au fait que les couches minces préparées sont issues de solutions instables subissant une photo-irradiation.

L'autre procédé ou système de dépôt par voie sol-gel est le procédé ou système colloïdal dans lequel on utilise des dispersions de petites particules en particulier d'oxydes ou de fluorures, cristallisées ou amorphes déjà formées chimiquement en solution, avec un diamètre préférentiellement de l'ordre de quelques dizaines de nanomètres pour des applications optiques. Les particules sont préalablement préparées par procédé sol-gel ou synthèse hydrothermale, soit en favorisant un mécanisme de germination-croissance puis en stabilisant le système à un degré de nucléation voulu, soit par précipitation-peptisation dans un solvant adapté, pour donner des suspensions colloïdales, ces suspensions constituant ce que l'on appelle un « sol ».

Lors du dépôt, l'évaporation du solvant-celui-ci étant choisi suffisamment volatil pour s'évaporer facilement - entraîne une augmentation de la concentration en particules qui, dans la plupart des cas, précipitent sur le substrat.

Le revêtement résultant est poreux, sans contrainte interne et mécaniquement non-résistant à l'abrasion.

Des exemples de réalisation de couches sol/gel par un tel procédé sont décrits notamment dans la demande de brevet US 7 148 458 (NTIS) correspondant aux brevets US 4 929 278 et US 4 966 812 dans les brevets US 2 432 483 et US 4 271 210.

La demande de brevet US 7 148 458 (NTIS), décrit un procédé de dépôt de film antireflet sur des substrats en plastique, consistant à synthétiser un gel éthanolique dans le système $SiO_2$-$B_2O_3$-$Al_2O_3$-BaO jusqu'à obtenir une certaine complexité moléculaire, puis à reliquéfier ce gel en cassant mécaniquement certains ponts interpolymériques. On obtient ainsi un film poreux à faible indice de réfraction (environ 1,23), réalisé à température ambiante, ce qui permet une adaptation aux substrats en plastique ; toutefois ce film ne présente qu'une médiocre résistance à l'abrasion.

Les brevets américains 2 432 483 et 4 271 210 divulguent la possibilité d'utiliser des colloïdes de silice ou d'alumine pour la réalisation de revêtements diélectriques antireflets, permettant d'augmenter la porosité de ces revêtements et donc d'abaisser leur indice de réfraction. Si ces procédés présentent l'avantage de pouvoir être mis en oeuvre à de basses températures, les couches colloïdales obtenues ont une très faible résistance mécanique et sont particulièrement sensibles à tout contact physique.

Par ailleurs, l'article intitulé « Colloïdal Sol-Gel Optical Coatings », paru dans « the American Ceramic Society Bulletin », vol.69, n°7, pp. 1141-1143, 1990, décrit un procédé de dépôt de couches minces par voie sol/gel utilisant l'enduction centrifuge.

Cet article précise qu'en utilisant des suspensions colloïdales sol-gel et qu'en choisissant judicieusement des solvants volatils pour constituer la phase liquide du milieu colloïdal, il est possible d'effectuer des traitements à température ambiante, sans chauffage excessif du substrat. Cette technique permet donc de traiter des matériaux thermiquement fragiles.

Toutefois, la nature même de ces films colloïdaux, c'est-à-dire poreux, sous-entend une faible résistance mécanique de ces films, tant du point de vue de l'abrasion, que de celui de l'adhésion au substrat sur lequel ils ont été déposés. De tels dépôts ne supportent donc aucun contact physique que ce soit le toucher ou l'essuyage, sans être endommagés. Les seules forces de cohésion qui existent dans ces films colloïdaux sont du type adsorption physique et il n'existe aucune liaison chimique entre les particules et le substrat, ni entre les particules elles-mêmes.

La tenue mécanique peut être cependant nettement améliorée par l'ajout d'un liant entre les particules. Ce liant, véritable « joint » chimique inter-particulaire peut être de nature organique, inorganique ou hybride. Il renforce la cohésion mécanique du système.

On connaît ainsi d'après l'art antérieur, au moins trois documents faisant référence à une amélioration significative de la tenue mécanique des couches minces optiques à base de silice colloïdale ($SiO_2$).

Le brevet US 2 432 484 divulgue l'utilisation d'un produit composé d'alcool, de catalyseur et de tétraéthylorthosilicate et servant de liant chimique entre les particules colloïdales, de manière à renforcer la cohésion de l'édifice poreux. Ce liant chimique est soit appliqué sur la couche de silice colloïdale déjà déposée, soit incorporé dans le milieu traitant (c'est-à-dire le sol colloïdal) et l'ensemble est appliqué en un seul traitement. Compte tenu de la proportion de liant chimique utilisé, la porosité du dépôt colloïdal peut rester quasiment inchangée et l'on conserve de ce fait les propriétés optiques. La résistance mécanique du film ainsi renforcé autorise le toucher et l'essuyage. De plus, un traitement thermique supplémentaire du revêtement à faible température, c'est-à-dire aux environs de 100°C, permet d'améliorer encore cette résistance. Toutefois, un tel dépôt reste vulnérable en cas de forte agression abrasive.

On connaît également d'après un article de R.G MUSKET et al., du Lawrence Livermore national Laboratory de Californie, paru dans Appl. Phys. Lett., vol. 52(5), 1988, un procédé d'accroissement de l'adhésion de l'interface oxyde/oxyde, à l'aide d'un faisceau d'ions. Les auteurs décrivent un traitement par irradiation à 200 keV, d'ions hélium $He^+$ de couches antireflets à base de silice colloïdale. Ce traitement permet d'améliorer l'adhésion des particules entre elles et des particules avec le substrat, ce qui assure à la couche ainsi traitée une résistance au nettoyage optique habituel (essuyage) sans modification des performances optiques. L'explication avancée pour ce phénomène repose sur une réactivité de surface des particules colloïdales, accrue grâce au bombardement ionique.

La demande de brevet français n°93 03987 du 5 Avril 1993 du CEA décrit un procédé d'amélioration de la résistance à l'abrasion de couches minces à propriétés optiques antireflets grâce à l'utilisation de réactifs alcalins après dépôt du film. Cependant, bien qu'un tel procédé soit réalisé à température et pression ordinaires, la résistance à l'abrasion de telles couches est insuffisante pour une utilisation « grand public ».

Le brevet français FR-A-2 680 583 du CEA décrit un matériau présentant des propriétés antireflets, ainsi que des propriétés hydrophobes et de résistance à l'abrasion. Ce matériau comprend un substrat de nature organique ou inorganique, recouvert successivement d'une couche de promoteur d'adhérence réalisée dans un matériau choisi parmi les silanes, d'une couche antireflet de colloïdes de silice enrobés d'un liant siloxane, d'une couche antiabrasive d'un polymère fluoré. Toutefois, ce matériau présente une fenêtre de transmission spectrale typique d'un revêtement monocouche, de l'ordre de 100 nm seulement et une résistance à l'abrasion honnête sans être à toute épreuve.

La demande de brevet français FR 2 682 486 du CEA fait état de la préparation de miroirs diélectriques à haute tenue au flux laser, par un procédé réalisé à température ambiante, ce qui permet une adaptation aux substrats organiques. Les couches minces présentant les propriétés optiques souhaitées sont préparées à partir de suspensions colloïdales, que l'on dépose en alternant un matériau à faible indice de réfraction avec un matériau à indice de réfraction élevé.

Toutefois, les couches colloïdales utilisées sont par nature poreuses, ce qui se traduit par un indice de réfraction faible, comparé à l'indice d'un film du même matériau sous forme dense. Par conséquent, à réflectivité équivalente, il est nécessaire d'empiler un nombre plus important de couches pour palier cette différence d'indice ce qui implique un traitement plus long, allant de pair avec une fragilisation du revêtement optique.

La demande de brevet français FR 93 08762 du CEA fait état de la préparation de matériaux composites à indice de réfraction élevé, caractérisé en ce qu'ils comprennent des colloïdes d'oxyde de métal enrobés dans un polymère polyvinylique, soluble dans un solvant alcoolique. Le polymère organique enrobant les colloïdes entraîne une diminution de la porosité ouverte résiduelle entre les particules d'oxyde. Il en résulte une augmentation de l'indice de réfraction de la couche déposée, un accroissement des propriétés mécaniques de résistance à l'abrasion par rapport à la couche colloïdale correspondante puisque le polymère sert de liant entre les particules, et une amélioration de la tenue au flux laser.

Cependant, l'amélioration des propriétés mécaniques de résistance à l'abrasion de la couche obtenue nécessite l'utilisation de couches de promoteurs d'adhérence ou de couches d'agents de couplage. Ceci augmente les temps de fabrication et les coûts de production. De plus, les propriétés mécaniques de résistance à l'abrasion restent insuffisantes en particulier dans le cas d'une application grand public, par exemple, dans le cas de la réalisation du traitement antireflet d'écrans, notamment d'écrans à tubes cathodiques pour téléviseurs ou autres.

L'invention a donc pour but, entre autres, de surmonter les inconvénients de l'art antérieur cité plus haut et de fournir un procédé de préparation d'un matériau optique par dépôt sur un substrat d'au moins deux couches de matériau polymérique inorganique à base d'au moins un oxyde de métal ou de métalloïde, qui puisse être mis en oeuvre à température peu élevée, de préférence à température ambiante, sur tout substrat, avec un équipement simple et peu onéreux et dont la durée soit notablement réduite.

Le procédé doit également permettre d'obtenir des matériaux optiques ayant de bonnes caractéristiques de résistance mécanique, en particulier une bonne résistance à l'abrasion, ainsi qu'une excellente adhésion d'une part entre couches et d'autre part entre les couches et le substrat.

Ce but et d'autres encore sont atteints, conformément à l'invention, par un procédé de préparation d'un matériau optique par dépôt sur un substrat d'au moins deux couches de matériau polymérique inorganique à base d'au moins un oxyde de métal ou de métalloïde caractérisé en ce que les couches sont déposées à partir de solutions de précurseur(s) n'ayant pas subi de photo-irradiation et en ce que les couches déposées sont densifiées réticulées à

température ambiante par une insolation aux rayons ultraviolets.

Du fait que l'on opère la réticulation/densification à température ambiante le procédé selon l'invention est applicable à des substrats en matière plastique ou un tout autre matériau ne supportant pas des températures de traitement élevées, d'autre part le procédé peut être réalisé en une durée notablement plus courte, et avec un appareillage très simplifié par rapport aux procédés impliquant une réticulation-densification thermique qui nécessitent de nombreux moyens tels que étuve sous vide ou atmosphère controlée, bac de rinçage etc..., et qui sont relativement coûteux en énergie.

Le traitement d'insolation par les ultraviolets permet de réticuler le réseau polymérique par exemple d'oxyhydroxyde de métal ou de métalloïde de chaque couche et ainsi de densifier cette couche. Ce traitement entraine notamment une meilleure tenue mécanique et une augmentation de l'indice de réfraction par rapport à une couche équivalente n'ayant pas subi un tel traitement.

De manière inattendue, le procédé selon l'invention cumule les avantages des deux familles de procédé sol-gel sans en présenter les inconvénients, en ce sens que d'une part comme les systèmes colloïdaux, il peut être mis en oeuvre à température ambiante mais en donnant des revêtements résistants et que, d'autre part, contrairement aux systèmes sol-gel polymériques une telle résistance est obtenue à faible température.

Ledit oxyde de métal ou de métalloïde est de préférence choisi parmi l'oxyde de tantale, l'oxyde de titane, l'oxyde d'yttrium, l'oxyde de scandium, l'oxyde de zirconium, l'oxyde de hafnium, l'oxyde de thorium, l'oxyde de niobium, l'oxyde de lanthane, l'oxyde d'aluminium, l'oxyde de silicium et l'oxyde de magnésium.

Selon un aspect particulièrement avantageux de l'invention, dans la cas où le matériau polymérique de chaque couche comporte des ions chlorures (halogénures) résiduels, une densification par insolation aux UV permet en outre d'améliorer la mouillabilité de couches à base de ce matériau.

Selon un premier mode de réalisation du procédé selon l'invention on effectue une réticulation-densification par insolation aux rayons ultraviolets de l'ensemble (de l'empilement) des couches déposées. Un tel mode de réalisation présente l'avantage essentiel d'une durée globale du procédé extrêmement réduite.

Selon un second mode de réalisation du procédé selon l'invention on effectue une réticulation-densification par insolation aux rayons ultraviolets sur chacune des couches déposées, à l'issue du dépôt de chacune des couches de matériau polymérique inorganique.

Un tel mode de réalisation, du fait que la densification UV rend mouillables les surfaces juste après insolation assure une bonne interaction entre les couches et améliore la tenue mécanique à l'abrasion du revêtement bien que le gain de temps sur l'ensemble du procédé soit très légèrement inférieur à celui obtenu avec le premier mode de réalisation.

Le procédé selon l'invention permet de préparer des matériaux optiques présentant un nombre quelconque de couches polymériques à base d'oxyde de métal ou de métalloïde.

Ainsi, l'invention permet-elle en, particulier de préparer un matériau optique comprenant un substrat de nature organique ou inorganique recouvert par au moins une couche de matériau polymérique densifiée-réticulée à base d'oxyde de métal ou de métalloïde en particulier à base d'oxyde de tantale, à indice de réfraction élevé, mécaniquement résistant à l'abrasion. De préférence au moins une autre couche déposée est choisie en outre parmi

- Une couche polymérique densifiée-réticulée à base d'oxyde de métal ou de métalloïde, en particulier à base d'oxyde de silicium ou d'oxyde de magnésium, à faible indice de réfraction.
- Une couche polymérique densifiée-réticulée à base d'oxyde de métal ou de métalloïde par exemple à base d'oxyde de tantale et d'un autre oxyde de métal ou de métalloïde tel que l'oxyde de silicium, à indice de réfraction moyen.

L'invention permet notamment la préparation d'un matériau antireflet bande étroite ou large bande et d'un miroir diélectrique.

Le matériau antireflet comprend un substrat de nature organique ou inorganique recouvert sucessivement par :

- Une couche de matériau polymérique densifiée-réticulée à indice de réfraction élevée.
- Une couche de matériau polymérique à faible indice de réfraction.

Un tel matériau sera plutôt un matériau antireflet à « bande étroite » mais extrêmement performant et convenant en particulier pour des applications en lunetterie.

Si le matériau antireflet comprend, en outre, appliquée sur le substrat au dessous de la couche à indice de réfraction élevé, une couche à indice de réfraction moyen (« couche du bas »), on obtient alors un matériau antireflet dit à « large bande »; la différence de largeur de bande existant entre d'une part un matériau antireflet à « large bande » et d'autre part un matériau antireflet à « bande étroite » est d'environ 50% ou plus.

Dans l'ensemble de la description, les termes indices de réfraction "faible", "moyen" et "élevé" doivent généralement être interprétés respectivement comme signifiant que l'indice est inférieur à 1,5 environ, compris entre 1,5 et 1,8 environ et supérieur à 1,8 environ. Tandis que le substrat a par exemple un indice compris entre 1,45 et 1,60 environ.

Le matériau antireflet peut également comprendre, sur la couche à faible indice de réfraction, une couche antiabrasive, réalisée de préférence à base d'un fluoroorganosilane (silane fluoré).

La présence, en outre, d'une couche antiabrasive selon l'invention à base de préférence de silane fluoré, permet de conserver les propriétés antireflets tout en augmentant significativement la résistance à l'abrasion.

En outre, la couche de silane fluoré procure au dépôt un caractère antiadhésif et hydrophobe particulièrement intéressant puisqu'il facilite le nettoyage de la surface traitée.

Les couches antireflets ainsi préparées par le procédé selon l'invention mettant en jeu une réticulation-densification à température ambiante par une insolation aux rayons ultraviolets, sont homogènes et exemptes de craquelures et/ou de plans de clivage internes. En conséquence, le film antireflet obtenu est suffisamment élastique pour tolérer de faibles torsions ou déformations, lorsqu'appliqué sur un substrat plastique. De plus, ce film résiste à une atmosphère de chaleur humide et saline et révèle une bonne durée de vie, même après plusieurs immersions successives dans l'eau bouillante salée (supérieure ou égale à 10).

Lorsqu'il est appliqué sur un substrat vitreux le revêtement antireflet large bande par exemple avec une largeur de bande de 300 nm, centré à 550 nm, préparé par le procédé selon l'invention présente des propriétés de résistance mécanique remarquables et peut donc être mis en oeuvre dans le cadre d'une utilisation grand public telle que l'application aux écrans à tube cathodique pour télévisions.

Généralement le matériau antireflet préparé par le procédé selon l'invention remplit en effet de manière surprenante l'ensemble des exigences requises pour une telle utilisation à savoir:

- une réflexion spéculaire inférieure à 0,8% à 580 nm.
- une réflexion inférieure à 1% entre 450 et 700 nm sur toute la largeur spectrale.
- une dépendance angulaire de la réflexion minimale.
- une tenue mécanique définie par une résistance à l'abrasion sévère selon la norme US-MIL-C-0675-C caractérisée par une absence de dommages après 40 passages.
- une tenue chimique caractérisée par une résistance aux produits d'entretien courants, aux acides, bases et aux solvants organiques (éthanol, acétone, etc...).

Le procédé selon l'invention permet également de préparer un matériau réfléchissant, comprenant un substrat organique ou inorganique, recouvert d'au moins une séquence de deux couches comprenant:

- une couche à faible indice de réfraction analogue à celle déjà citée plus haut,
- une couche polymérique par exemple à base d'oxyde de tantale à indice de réfraction élevé et mécaniquement résistant à l'abrasion précédemment décrit ;
- éventuellement une couche antiabrasive.

Le matériau réfléchissant obtenu est un miroir diélectrique passif mono ou polychroïque, réfléchissant des longueurs d'onde allant du proche ultraviolet au proche infrarouge qui peut être préparé par un procédé simple opérant à température ambiante.

Le matériau réfléchissant préparé par le procédé selon l'invention peut également comprendre un substrat recouvert d'au moins une couche à faible indice de réfraction déjà décrite plus haut, et d'au moins une couche à indice de réfraction « moyen » analogue à celle déjà décrite plus haut pour le matériau antireflet,formée de préférence, d'un matériau polymérique à base d'oxyde de tantale et d'un autre oxyde de métal ou de métalloïde, de préférence l'oxyde de silicium ou l'oxyde de magnésium.

Le matériau obtenu pourra alors plutôt être qualifié de « matériau semi-réfléchissant ».

De même en inversant l'ordre des couches des matériaux antireflet décrits plus haut on obtient également des matériaux réfléchissants ou semi-réfléchissants.

L'invention sera mieux comprise à la lecture de la description suivante d'un mode de réalisation de l'invention, donné à titre d'exemple illustratif et non limitatif.

Selon l'invention, chaque couche de matériau polymérique inorganique à base d'au moins un oxyde de métal ou de métalloïde est généralement préparée et déposée par des étapes consistant à :

- préparer une solution (1) clans un solvant (3) comprenant un composé moléculaire à base de métal ou de métalloïde, appelé encore précurseur moléculaire de métal ou de métalloïde ;
- éventuellement, mélanger ladite solution (1) avec un ou plusieurs solution(s) dans un solvant de même nature comprenant un ou plusieurs composé(s) de métal ou de métalloïde dont le métal ou métalloïde est différent du

métal ou métalloïde du composé de métal ou de métalloïde de la solution (1) ; ou

ajouter le ou lesdits composé(s) de métal ou de métalloïde à ladite solution (1) ; moyennant quoi on obtient une solution (2) ;

- Déposer la solution obtenue sur un support , le support pouvant être formé du substrat et de la couche ou de l'empilement des couches précédemment déposées pour former une couche uniforme de matériau polymérique.

C'est cette couche de matériau polymérique à base d'au moins un oxyde de métal ou de métalloïde qui est soumise à une réticulation-densification à température ambiante par une insolation aux rayons ultraviolets.

Selon une caractéristique particulièrement intéressante du procédé selon l'invention les solutions de précurseur(s) servant au dépôt ne subissent pas contrairement à l'art antérieur, d'irradiation, en particulier de photoirradiation, préalablement au dépôt.

Une telle irradiation, réalisée sur des solutions de précurseurs(s), et non sur les couches déposées induit en effet une forte instabilité de ces solutions ayant pour conséquence une durée de vie très limitée.

La première étape du procédé de dépôt de chaque couche consiste ainsi à synthétiser une solution dans un solvant contenant un composé-précurseur moléculaire de métal ou de métalloïde susceptible de former un film ou une couche polymérique homogène d'oxyhydroxyde de métal ou de métalloïde lors du dépôt, par réaction d'hydrolyse condensation avec la vapeur d'eau contenue dans l'air.

Cette solution 1 est obtenue par dissolution dans un solvant d'un composé précurseur de métal ou de métalloïde qui peut être choisi parmi tout composé adéquat, tel qu'un alcoxyde ou autre sel de métal ou de métalloïde, tel qu'un halogènure (Iodure, Fluorure, Bromure, Chlorure) en particulier un chlorure.

Le(s) solvant(s) est(sont) choisi(s) de préférence parmi les alcools aliphatiques saturés de formule ROH où R est un groupe alkyle de 1 à 5 atomes de carbone.

Le métal ou métalloïde est choisi de préférence parmi le tantale, le titane, le silicium, l'yttrium, le scandium, le zirconium, le hafnium, le thorium, le niobium, le lanthane, l'aluminium et le magnésium.

La concentration du composé précurseur de métal ou de métalloïde est de préférence de 1 à 20%, de préférence encore de 5 à 10% en équivalent en masse d'oxyde de métal ou de métalloïde dans le solvant.

Par exemple, dans le cas où l'on cherche à déposer une couche à indice de réfraction élevé, ce sel métallique peut être un sel de tantale anhydre, de préférence un pentahalogénure de tantale $TaX_5$ (avec X=F, Br, Cl, ou I). De préference la solution 1 est obtenue par dissolution du pentachlorure de tantale $TaCl_5$ dans un solvant qui est de préférence de l'éthanol absolu.

Ce mélange donne lieu à la formation, dans le cas par exemple ou l'halogène est le chlore, d'un chloroalcoxyde de tantale selon l'équilibre suivant comme cela est décrit par Pascal P., dans le Nouveau traité de chimie Minérale, Masson Ed. Paris, Tome XII (1959), p.576:

$$TaCl_5 + xROH \leftrightarrow TaCl_{5-x}(OR)_x + xHCl$$

Par exemple, x=3, c'est à dire que l'on a alors l'équilibre suivant:

$$TaCl_5 + 3EtOH \leftrightarrow TaCl_2(OEt)_3 + 3HCl$$

La réaction est légèrement exothermique (élévation de la température jusqu'à environ 50°C). La solution (1) obtenue après refroidissement et filtration est limpide, transparente et très acide.

Dans cette forme de réalisation préférée, où au moins une des couches déposées qui est plutôt une couche à indice de réfraction élevée est préparée à partir d'une telle solution de sel de tantale anhydre (1), le procédé de la présente demande présente encore un certain nombre d'avantages supplémentaires par rapport à l'art antérieur, où l'on utilise généralement comme précurseur un alcoxyde de métal ou de métalloïde tel qu'un alcoxyde de tantale par exemple le pentaéthoxyde de tantale $Ta(OEt)_5$ hydrolysé en milieu acide HCl ou $CH_3COOH$. De telles solutions gélifient relativement rapidement, en l'espace de 2 à 3 jours environ, et leur stabilité est donc nettement réduite par rapport aux solutions de chloroalcoxyde utilisées de préférence selon l'invention. De plus, les solutions d'alcoxydes nécessitent obligatoirement un agent complexant et sont d'autre part d'un coût beaucoup plus élevé que les solutions préparées par exemple à partir de $TaCl_5$ qui est un produit facilement disponible et d'un prix relativement bas.

La solution 1, par exemple de chloroalcoxyde de tantale dans l'éthanol encore appelée solution $TaCl_5/EtOH$ dans la suite de la description a généralement une concentration de 1 à 20% exprimée en équivalent massique $Ta_2O_5$.

Cette solution est peu sensible à l'humidité de l'air. Cependant, si on y ajoute de l'eau par exemple dans un rapport molaire $H_2O/Ta$ de 10 il se forme rapidement un gel. De ce fait, une telle solution doit être conservée de préférence à l'abri de l'humidité ambiante.

Bien qu'une telle solution puisse être utilisée de manière tout à fait satisfaisante, et soit nettement supérieure pour les raisons déjà indiquées plus haut, aux solutions d'alcoxydes utilisées jusqu'alors, l'excès de HCl présent dans le mélange entraîne cependant deux inconvénients.

Tout d'abord, les vapeurs acides provenant de la solution sont corrosives vis-à-vis des objets métalliques. Ensuite, la couche déposée contient des ions halogénures excédentaires tels que des ions chlorures, qui rendent la surface du revêtement relativement non-mouillante et empêchent une bonne adhésion du dépôt suivant et qui ne sont pas éliminés par un traitement thermique à basse température.

De préférence, on cherche donc à éliminer les ions halogénures en particulier les ions chlorure en excès dans la solution ou tout au moins on en limite l'excès par rapport au précurseur métallique.

L'élimination de l'excès par exemple d'acide chlorhydrique (si X = Cl) peut se faire par évaporation c'est-à-dire que l'on élimine du mélange $TaCl_5$, l'excès d'acide chlorhydrique et l'éthanol par évaporation sous pression réduite par exemple $10^{-2}$ mbar. On obtient un solide blanc correspondant à du $TaCl_2(OEt)_3$, le résidu est ensuite partiellement redissous dans l'éthanol pour donner une solution par exemple de 5 à 10% de préférence à 7 % en équivalent massique $Ta_2O_5$. La dissolution est totale après par exemple un reflux de 4 heures à 80°C. Après filtration du mélange, on obtient une solution limpide et transparente de pH voisin de 2. Dans la suite de la description, on appellera cette solution $TaCl_2(OEt)_3$/EtOH.

La sensibilité de cette solution à l'humidité est proche de celle de la solution $TaCl_5$/EtOH.

Il est également possible comme déjà mentionné plus haut de préparer des solutions de tantale (1) en utilisant différents sels métalliques $TaX_5$ avec X = F,Br,I outre Cl dissous dans l'éthanol par exemple à une concentration de 5% à 10% en équivalent en masse de $Ta_2O_5$ afin d'obtenir des solutions traitantes moins acides et d'éliminer les problèmes de mouillabilité de la couche déposée liés essentiellement à la présence des chlorures.

Dans tous les cas la concentration de composé, précurseur moléculaire de tantale est de préférence de 1 à 20%, de préférence encore de 5 à 10% en équivalent en masse d'oxyde de tantale, dans le solvant, tel que le solvant alcoolique.

Dans le cas où l'on cherche à déposer une couche à faible indice de réfraction, celle-ci peut être formée par exemple d'oxyde de silicium sous forme polymérique (silice polymérique) ou bien encore d'oxyde de magnésium.

La solution traitante utilisée pour l'obtention d'une couche mince de silice polymérique est obtenue de préférence par hydrolyse-condensation du tétraéthyle orthosilicate (TEOS, $Si(OEt)_4$) en milieu acide HCl ou $HNO_3$. Ceci donne lieu à la formation d'espèce oligomérique selon la réaction :

$$Si(OEt)_4 + hH_2O \xrightarrow[EtOH]{H+} SiO_y(OH)_z(OEt)_{4-2y-z} + (2y+z)\,EtOH + (h-y-z)H_2O$$

Cette solution est instable et évolue avec le temps car les réactions d'hydrolyse et de condensation, formatrices du réseau silicaté, sont relativement lentes dans le cas du silicium.

Les propriétés optiques, mécaniques et chimiques de la couche mince de silice polymérique dépendent étroitement de ces paramètres physicochimiques.

A titre d'exemple et après optimisation, on obtient les conditions de préparation suivantes :

On prépare une solution mère de silice polymérique en $SiO_2$ de 10,6 % en masse dans l'éthanol c'est à dire que h = 10 et que le pH est d'environ 2.

Après 4 heures d'agitation magnétique et 3 à 4 semaines de mûrissement à température ambiante au repos, la solution mère est diluée avec de l'éthanol pur à 4 % environ en masse (par exemple à 3,75% en masse), ce qui permet de ralentir et stabiliser la formation du réseau silicaté. La solution obtenue est limpide et transparente. Elle reste stable durant douze mois au moins, alors que la solution mère gélifie au delà d'un mois.

Les couches minces de silice polymérique ont un indice de réfraction à 550 nm avant et après réticulation, par exemple par cuisson insolation aux UV voisin de 1,40.

Les couches minces de silice polymérique ont d'excellentes propriétés de résistance à l'abrasion et sont résistantes aux solvants organiques usuels alcools, acétone, aux acides et bases faibles (excepté l'acide fluorhydrique).

La surface de la couche de silice polymérique présente de bonnes propriétés de mouillabilité à l'eau et à l'éthanol qui sont encore améliorées par l'insolation aux ultraviolets selon l'invention.

On peut mélanger à la solution (solution 1) dans un solvant, une solution dans un solvant de même nature comprenant un composé-précurseur de métal ou de métalloïde dont le métal ou métalloïde est différent de celui du composé de métal ou de métalloïde de la solution 1, ce composé précurseur donnant ensuite un composé à base d'oxyde de métal ou de métalloïde l'addition se faisant, dans une proportion de 0 à 100% en équivalent d'oxyde de

métal ou de métalloïde pour 100 à 0% en équivalent d'oxyde de métal ou de métalloïde de la solution (1).

Le métal ou métalloïde est choisi parmi les éléments déjà cités plus haut pour la solution (1) mais est différent du métal ou métalloïde du composé précurseur de la solution (1).

On peut également ajouter le composé de métal ou de métalloïde dont le métal ou métalloïde est différent de celui du composé précurseur de la solution (1) directement dans la solution (1) de composé moléculaire précurseur de métal ou de métalloïde pour obtenir directement la concentration voulue.

On obtient dans l'un ou l'autre cas une solution (2) de précurseurs moléculaires ayant de préférence une concentration de 1 à 20%, de préférence encore de 5 à 10% en équivalent en masse d'oxydes de métaux ou de métalloïdes, les proportions en équivalent d'oxyde de métal ou de métalloïde apporté/oxyde métallique ou de métalloïde de la solution (1) variant de 0/100 à 100/0.

Par exemple, dans le cas où l'on utilise en tant que composé moléculaire précurseur de métal ou de métalloïde de la solution (1), un halogénure, par exemple un chlorure de métal ou de métalloïde tel que du pentachlorure de tantale, il est ainsi possible de diminuer la proportion d'ions chlorures (ou halogénures) par rapport au précurseur métallique dans la solution, en y ajoutant un autre composé métallique ne contenant pas d'ions chlorures tout en gardant les propriétés optiques et mécaniques du matériau après dépôt et traitement de réticulation.

L'oxyde de titane apparaît comme un excellent candidat, l'oxyde de tantale assurant les propriétés de résistance à l'abrasion du matériau.

On peut utiliser de préférence de 1 à 99%, par exemple de 10 à 90%, exprimée en équivalent en masse d'oxyde, du composé précurseur métallique ne contenant pas d'ions chlorure et donnant ensuite par exemple l'oxyde de titane, mais de préférence la formulation retenue, permettant d'obtenir des couches répondant aux spécifications de résistance à l'abrasion et d'indice de réfraction, correspond à une proportion finale inférieure ou égale à 50% en masse exprimée en oxyde de titane.

Pour obtenir un tel système, on additionne à la solution $TaCl_5$/EtOH du tétra-isopropoxyde de titane $(Ti(OPr^i))_4$ en tant que précurseur mais on pourrait aussi utiliser un autre alcoxyde de titane ou bien un autre composé précurseur de l'oxyde de titane, après filtration du mélange, on obtient une solution (2) limpide et transparente de pH<2.

Dans la suite de la description, on appellera cette solution par exemple $TaCl_5$-$Ti(OiPr)_4$/EtOH, une telle solution permet de déposer des couches ayant un indice de réfraction élevé.

Enfin, il est aussi possible d'ajouter à la solution (1) plusieurs solutions comprenant plusieurs composés de métal ou de métalloïde, ou bien plusieurs composés de métal ou de métalloïde lesdits métaux ou métalloïdes étant différent du composé de métal ou de métalloïde de la solution (1).

Il est ainsi possible de moduler à volonté de moduler à volonté l'indice de réfraction des couches polymériques obtenues tout en conservant notamment les propriétés de tenue mécanique à l'abrasion de ces couches.

Il est par exemple possible de moduler l'indice de réfraction d'un système polymérique à base d'oxyde de tantale et d'oxyde de silicium de façon continue entre 1,45 et 1,93, en faisant varier la proportion des constituants du mélange.

On peut également utiliser pour moduler l'indice de réfraction, tout autre oxyde que l'oxyde de silicium dans les proportions citées plus haut, en mettant en oeuvre le précurseur adéquat. On pourra citer ainsi l'oxyde de magnésium.

On peut aussi augmenter l'indice de réfraction d'une couche, par exemple à base d'oxyde de tantale jusqu'à 2,04, après densification en ajoutant une solution contenant un précurseur à base par exemple de titane à la solution 1, tout en conservant de bonnes propriétés de résistance mécanique à l'abrasion.

Cependant, il faut réserver l'emploi du composite à base de $TiO_2$ de préférence à des utilisations autres que les lasers de puissance. En effet, cet oxyde possède une absorption intrinsèque de l'énergie lumineuse qui limite et plafonne sa tenue au flux laser à de faibles valeurs. Ce matériau polymérique ($Ta_2O_5/TiO_2$) est par contre idéal pour d'autres applications par exemple dans l'optique intégrée ou pour des lames semi réfléchissantes sur plastique, puisque s'il est associé à de la silice colloïdale, il forme un couple de rapport d'indices de réfraction très élevé par exemple 1,67.

Enfin, on pourra également préparer des couches polymériques à base de trois oxydes ou plus par exemple à base d'oxyde de tantale, d'oxyde de titane et d'oxyde de silicium, les proportions des *trois* constituants (ou plus) variant sur toute la plage des valeurs possibles et permettant ainsi de moduler à volonté l'indice de réfraction de la couche déposée et d'obtenir ainsi des couches à indice de réfraction faible, moyen ou élevé.

Chaque solution (1) ou (2) contenant le ou les précurseur(s) moléculaire(s) de métal ou de métalloïde, ainsi obtenue, est déposée sur un support pour donner chaque fois une couche polymérique d'oxy-hydroxyde de métal ou de métalloïde.

On désigne par le terme général « support » tout substrat organique ou inorganique, tels que ceux qui seront décrits ultérieurement ou toute couche active ou favorisant l'adhérence, déposée sur ledit substrat. Il est bien évident pour l'homme du métier que si la couche n'est pas la première à être déposée, elle est déposée sur un support constitué du substrat et de la ou des couches(s) déjà déposée(s).

Dans la suite de la description, le terme « substrat organique » désigne plus précisément un substrat plastique,

par exemple l'un de ceux choisis parmi les polyacrylates, les polycarbonates, le polyallylcarbonates et les polyamides. Toutefois, cette liste n'est pas limitative et couvre de façon plus générale les matériaux polymères organiques.

Le terme « substrat inorganique » couvre plus précisément un substrat minéral, c'est-à-dire par exemple les matériaux amorphes ou même cristallins et notamment la silice, les verres borosilicatés ou sodocalciques, les fluorophosphates et les phosphates.

Comparés aux substrats minéraux, les substrats plastiques sont avant tout moins coûteux, plus facilement modulables, plus légers et moins fragiles aux chocs. Cependant leur utilisation nécessite préférentiellement, la présence d'une couche intercalée entre le substrat organique et la première couche déposée, assurant une bonne comptabilité à cette interface lors de l'étape de densification et en particulier une absorption des contraintes induites. Selon l'invention, on choisit cette couche d'interface, ou vernis, de préférence parmi les polymères organosilanes, chargés éventuellement en colloïdes minéraux.

Généralement, le substrat est un substrat plan ou un substrat présentant une faible courbure par exemple la surface d'un écran à tube cathodique pour téléviseur ou un verre de lunettes, mais le procédé selon l'invention permet de revêtir tout substrat quelle que soit sa forme.

Le dépôt des couches est effectué par exemple par trempage-retrait (« Dip coating » en anglais), par enduction centrifuge (« Spin coating » en anglais) par enduction laminaire (« Laminar Flow coating » en anglais), à l'aide d'un couteau horizontal (« Tape casting » en anglais) ou par tout autre procédé permettant d'obtenir un dépôt uniforme et une couche homogène en épaisseur.

Selon le procédé de l'invention, le matériau optique préparé comprend sur le substrat au moins deux couches de matériau polymérique inorganique à base d'oxyde de métal ou de métalloïde.

Plusieurs exemples particuliers de réalisation de ces matériaux optiques par le procédé de l'invention sont décrits ci-après.

Toutefois, le procédé selon l'invention permet plus largement de préparer tous les matériaux optiques comprenant au moins deux couches de matériau polymérique inorganique à base d'oxyde de métal ou de métalloïde, et toutes les combinaisons possibles de couches optiques quel qu'en soit: le nombre de la nature.

On a déjà indiqué qu'en fonction, de la nature des couches optiques, de leur épaisseur et de leur disposition les unes par rapport aux autres, on réalisera par exemple des matériaux antireflets ou réfléchissants.

Généralement l'épaisseur des couches, dites « couches minces » est toutefois de 0,1 à quelques µm par exemple de 0,1 à 10 µm et le nombre de ces couches est de 2 jusqu'à une dizaine environ, par exemple de 2 à 10.

Selon le premier mode de réalisation du procédé selon l'invention, on peut réaliser tout d'abord le dépôt des couches puis procéder à la réticulation-densification par insolation aux ultraviolets de l'ensemble des couches déposées.

Le traitement est réalisé sous une lampe UV, par exemple une lampe à vapeur de mercure ou lampe excimère, émettant de préférence dans le domaine des UV-B et UV-C c'est-à-dire d'une longueur d'onde de 180 à 280 nm.

La dose d'UV reçue par la couche doit être suffisante pour induire une réticulation.

La durée de l'exposition aux UV est fonction de la puissance d'émission de la lampe dans le domaine de longueur d'onde précité.

Généralement, cette insolation est réalisée à une énergie de 5 à 10 $J/cm^2$, de préférence à une énergie de 5 à 6 $J/cm^2$ pendant une durée de 10 sec. à 10 min., de préférence de 30 sec. à 5 min., par exemple de 1 minute, soit une puissance par exemple de l'ordre de 350 $mW/cm^2$. De préférence, on opère à pleine puissance.

La densification-réticulation UV peut être éventuellement associée à un traitement thermique ou traitement de recuit final à une température par exemple de 80 à 200°C, de préférence 100 à 150°C, pendant 10 à 60 minutes, de préférence de 15 à 30 minutes, par exemple à 150°C durant 30 minutes, un tel traitement permet de parfaire la densification des couches déposées, qui est déjà cependant tout à fait satisfaisante sans ce traitement de recuit final.

Selon un second mode de réalisation du procédé selon l'invention, on effectue la réticulation-densification par insolation aux rayons ultraviolets à l'issue du dépôt de chacune des couches de matériau polymérique inorganique généralement dans les mêmes conditions que celles déjà mentionnées plus haut.

Il est à noter que les paramètres de l'insolation aux UV peuvent varier en fonction de la nature des couches déposées, ainsi dans le cas d'une couche faible indice par exemple à base de $SiO_2$ polymérique, l'insolation est-elle réalisée avec une énergie et/ou une durée réduite correspondant à une puissance d'insolation d'environ 250 à 300 $mW/cm^2$.

De la même manière, on peut effectuer un traitement thermique ou traitement de recuit final dans les mêmes conditions que celles indiquées plus haut à l'issue du dépôt et de la réticulation des couches.

Suite au dernier traitement par insolation aux UV, c'est-à-dire suite au traitement par insolation aux UV de la dernière couche, ou du traitement par insolation aux UV de l'ensemble des couches, préalablement au traitement de recuit éventuel, et bien que la résistance aux attaques chimiques et mécaniques du matériau optique préparé par le procédé selon l'invention soit déjà excellente, on applique avantageusement selon l'invention - afin de renforcer les propriétés chimiques et mécaniques de l'empilement optique - un film mince hydrophobe antiabrasif à faible coefficient

de friction pour protéger la dernière couche appliquée qui est par exemple une couche à faible indice de réfraction.

L'emploi d'un agent hydrophobe tel que le Téflon® ne donne pas satisfaction car les interactions entre la couche de protection, et en particulier une couche supérieure en silice polymérique, sont faibles, rendant l'ensemble fragile à l'abrasion.

Les composés silanes fluorés présentent l'avantage de former une liaison chimique car ils contiennent des groupements susceptibles de réagir avec les groupements hydroxyles situés à la surface de la dernière couche, par exemple à base de silice polymérique, et qu'ils possèdent une chaîne fluorée longue assurant le caractère hydrophobe et le faible coefficient de friction du dépôt.

Parmi les produits existants, on a choisi le $C_6F_{13}CH_2CH_2$-Si $(OEt)_3$ ((Tridécafluoro-1,2,2,2-tétrahydrooctyl)-1-triéthoxysilane), connu sous le nom de T2494 de chez ABCR ou le $C_6F_{13}CH_2CH_2$-$SiCl_3$ ((Tridécafluoro-1,1,2,2-tétrahydro-octyl)-1-trichlorosilane, connu sous le nom de T2492 de chez ABCR.

Ces dérivés ont un faible indice de réfraction, proche de 1,4, et sont solubles dans certains composés perfluorés tels que le GALDEN HT110® de la société MONTEDISON.

Ainsi, par exemple, le système silice polymérique - « T2494 » obtenu, est inerte aux acides forts et bases fortes et aux solvants organiques usuels. La couche est parfaitement hydrophobe et très peu mouillante à l'éthanol. Elle résiste au test « sévère » de la norme militaire US-MIL-C-0675C et peut être très facilement nettoyée.

Du fait de sa très faible épaisseur (par exemple quelques nanométres c'est-à-dire notamment une dizaine de nm), la couche d'hydrophobe ne perturbe pas les propriétés optiques de la dernière couche déposée notamment de la couche à faible indice, par exemple de la couche de silice polymèrique.

On va maintenant décrire le procédé selon l'invention dans le cas particulier de la préparation d'un matériau antireflet tricouche avec un traitement de réticulation-densification par insolation aux ultraviolets de chacune des couches déposées.

De façon avantageuse, mais facultative, on procède tout d'abord à un nettoyage-décapage minutieux du substrat par exemple à l'aide d'une solution d'acide fluorhydrique dilué à 1 %, puis le substrat est rincé abondamment à l'eau désionisée. Il est ensuite dégraissé au savon optique, rincé à nouveau à l'eau distillée et séché à l'éthanol.

Une telle étape de nettoyage a une durée par exemple d'environ 5 minutes.

L'étape suivante consiste à appliquer sur le substrat nettoyé la couche à indice de réfraction moyen, par exemple, à partir d'une solution de précurseur donnant une couche de $Ta_2O_5$-$SiO_2$, en particulier une solution $TaCl_5$-$Si(OEt)_4$/EtOH, par exemple, dans les proportions respectives 80/20 exprimés en oxyde.

Cette couche est appliquée uniformément sur le substrat, par exemple soit par trempage-retrait (dip-coating), soit par enduction centrifuge, à une vitesse de 10 cm/min environ à 1000 t/min. environ, soit par enduction laminaire. Les deux dernières méthodes sont préférables car elles ne nécessitent que très peu de solution traitante. Toutefois, on pourra également utiliser d'autres techniques de dépôt. Ce type de dépôt en solution présente l'avantage de permettre le revêtement de surfaces relativement grandes avec des solutions traitantes très pures et de faible viscosité.

On procède ensuite, éventuellement (c'est-à-dire que cette étape peut être omise) à la densification-réticulation de cette couche par insolation aux rayons UV, par exemple aux UV B ou C, de préférence, à une énergie de 5 à 6 $J/cm^2$ pendant une durée de 1 minute (soit une puissance de l'ordre de 350 $mW/cm^2$ pendant le même temps). De préférence, on opère à pleine puissance.

Après refroidissement du substrat qui ne dure que de 1 à 5 minutes , grâce, par exemple, à l'assistance d'un jet d'air sous pression, on dépose la couche haut indice à base de $Ta_2O_5$, qui peut être préparée à partir de l'une quelconque des solutions de précurseur de $Ta_2O_5$ (1, 2), déjà décrites plus haut, puis l'on procède éventuellement à la densification-réticulation de cette couche par insolation aux ultraviolets dans les mêmes conditions que pour la couche à moyen indice.

On réalise ensuite le dépôt de la couche bas indice, par exemple, en $SiO_2$ polymérique, à partir d'une solution traitante adéquate, par exemple, l'une des solutions traitantes déjà mentionnées plus haut, c'est-à-dire une solution éthanolique de silice polymérique obtenue à partir de $Si(OEt)_4$ en milieu HC1 ou $HNO_3$, ou encore une solution telle que $[SiO_2]$ = 2,4% $[H_2O/Si]_{mol}$ = 12 et pH≈2, en milieu HCl ou $HNO_3$ que l'on nomme "silice oligomérique". Rappelons que selon l'invention, les solutions ne subissent aucune photoirradiation en particulier aux UV.

On procède ensuite à la densification-réticulation de cette couche par insolation aux UV, mais l'on expose la couche à bas indice de réfraction pendant une durée réduite par exemple 30 secondes à une énergie de 6 $J/cm^2$ environ, car les effets des UV sur la densification de cette couche sont plus limités que dans le cas des couches haut indice et moyen indice.

On met à profit l'échauffement de la surface du revêtement pour appliquer à chaud, de la manière déjà décrite, l'agent hydrophobe, tel que le « T2494 ».

L'ensemble du substrat et des trois couches appliquées subit alors de préférence un traitement thermique ou traitement de recuit, à une température par exemple de 80 à 200°C, de préférence 100 à 150 °C pendant 10 à 60 minutes de préférence 15 à 30 minutes, par exemple à 150°C durant 30 minutes, afin de pousser plus avant la densification des trois couches.

Le revêtement antireflet obtenu présente d'excellentes propriétés optiques, mécaniques et de tenue à l'abrasion.

La durée totale du procédé est, par exemple, de une heure environ.

Le procédé selon l'invention de préparation manuelle d'un tel revêtement antireflet avec réticulation-densification par insolation par les ultraviolets est particulièrement bien adapté au traitement d'un substrat organique, par exemple, en plastique ne supportant pas la température élevée des traitements thermiques.

Un tel procédé permet également de réaliser des revêtements antireflets large bande et résistant à l'abrasion, notamment sur des écrans de tube cathodique, remplissant l'ensemble des exigences citées plus haut. La densification UV permet d'abaisser notablement le temps de fabrication du revêtement tricouche en diminuant le nombre de traitements thermiques, par exemple, à 150°C de 4 à 1, l'inertie thermique du substrat volumineux triplant pratiquement les durées de traitement.

De plus, la densification UV, en rendant mouillables les surfaces juste après insolation, supprime les étapes de nettoyage intermédiaire, assure une bonne interaction entre les couches, et améliore la tenue mécanique à l'abrasion du revêtement, en particulier si la couche de silice polymérique provient de la préparation de "silice oligomérique".

Enfin, l'échauffement de surface engendré par les UV permet le dépôt à chaud de l'agent hydrophobe avant l'unique traitement thermique final du tricouche et ainsi renforce à peu de frais, la tenue mécanique du revêtement ; cette méthode de densification paraît donc relativement plus simple à mettre en oeuvre de manière industrielle qu'une série de traitements thermiques.

On va maintenant décrire le procédé selon l'invention dans le cas particulier de la préparation d'un matériau réfléchissant à large bande spectrale comprenant un substrat de nature organique ou inorganique, sur lequel est déposé au moins un ensemble de deux couches, par exemple, deux ensembles de deux couches, à savoir :

- une couche à faible indice de réfraction ; et
- une couche à indice de réfraction élevé.

Le substrat et les couches à faible indice de réfraction et à indice de réfraction élevé sont identiques à ceux décrits dans la réalisation du matériau antireflet.

De façon avantageuse, mais facultative, le substrat de nature organique ou inorganique est d'abord soumis à un nettoyage méticuleux, tel que celui décrit dans la réalisation du matériau antireflet.

On dépose ensuite sur le substrat nettoyé, une première couche à faible indice de réfraction selon l'une des techniques de dépôt en solution déjà citées. Le solvant étant avantageusement choisi parmi les alcools aliphatiques.

On procède alors à la réticulation de cette couche par UV dans les conditions déjà mentionnées pour le revêtement antireflet.

On procède ensuite au dépôt de la couche à indice de réfraction élevé, et l'on effectue de nouveau une densification par UV.

Ensuite, on répète les opérations de dépôts précitées autant de fois que nécessaire pour obtenir la réflectivité voulue.

On soumet éventuellement l'ensemble de l'empilement à une cuisson ou recuit thermique dans des conditions analogues à celles mises en oeuvre pour le revêtement antireflet.

On peut encore améliorer la tenue du revêtement en procédant au dépôt d'une couche antiabrasive, hydrophobe, analogue à celle, déjà décrite dans le cas du matériau antireflet ci-dessus, et qui termine l'empilement, cette couche étant appliquée à chaud de la même manière que pour le revêtement antireflet, par exemple par pulvérisation.

L'invention va maintenant être décrite en référence aux exemples suivants donnés à titre illustratif et nullement limitatif.

## EXEMPLE 1

Cet exemple illustre la préparation d'un matériau optique bicouche comprenant une couche haute indice en $Ta_2O_5$ et une couche bas indice de $SiO_2$, selon le premier mode de réalisation du procédé selon l'invention c'est-à-dire avec une réticulation-densification finale par insolation aux rayons ultraviolets de l'ensemble des couches.

On prépare tout d'abord une couche haut indice en $Ta_2O_5$ en réalisant le dépôt avec trois types de solutions traitantes :

- $TaCl_5$/EtOH (7, 0 % en masse d'oxyde), $TaCl_2(OEt)_3$/EtOH (à 6,5 %) et $TaCl_2(OEt)_3$/EtOH-$NH_3$ (à 7,6 %).

Les vitesses de rotation du substrat sont respectivement fixées à 1 200, 1 000 et 1 700 tours $min^{-1}$.

Après deux minutes de séchage, les couches déposées ont un indice respectif de 1,601, 1,639 et 1,616 et ont chacune une épaisseur de 167, 141 et 163 nm. Les pics de réflexion maximale (pic quart d'onde) se situent respectivement à 1 070, 925 et 1 053 nm avant densification.

On prépare ensuite une couche bas indice en $SiO_2$ en réalisant le dépôt sur le substrat revêtu de la première couche en $Ta_2O_5$, avec quatre types de solutions traitantes :

- $SiO_2$ polymérique en milieu HCl préparée à partir d'une solution mère ayant une concentration en $SiO_2$ de 10,6 %, un rapport molaire $[H_2O]/[SiO_2]$ de 10, un pH voisin de 2, murie pendant un mois, et diluée jusqu'à obtenir une concentration en $SiO_2$ de 3,75 % ;
- $SiO_2$ polymérique en milieu $HNO_3$ préparée dans les mêmes conditions que ci-dessus ; et
- $SiO_2$ préparée selon les conditions proposées par S. MAEKAWA et T. OHISHI, dans J. Of Non-crystalline Solids, 169, 1994, p. 207 ($[SiO_2]$ = 2,4 %, $[H_2O]/[SiO_2]$ = 12 et pH ≈ 2, agitation durant une nuit, mais sans insoler la solution sous les UV, contrairement à la publication).

Il est à noter que l'utilisation de $SiO_2$ préparée selon un mélange de tétraéthoxysilane en milieu éthanolique avec une solution de catalyse acide HCl telle que $[SiO_2]$ = 2,4 %, $[H_2O]/[SiO_2]$ = 12 et pH ≈ 2, après agitation d'une nuit, toujours sans insolation aux UV est équivalente à la préparation précédente.

Les deux dernières préparations sont dénommées "silice oligomérique".

Les vitesses de rotation du substrat sont respectivement fixées à 3 400, 3 700 et 1 000 tours $min^{-1}$. Après deux minutes de séchage, les couches déposées ont un indice respectif de 1,393, 1,394, 1,409 et chacune une épaisseur de 128, 133, 123 nm. Les pics de réflexion minimale (pic quart d'onde) se situent respectivement à 715, 740 et 691 nm avant densification.

On densifie le bicouche ainsi réalisé sous UV à pleine puissance (c'est-à-dire avec une puissance de 350 $mW/cm^2$).

On profite de l'échauffement de la surface du revêtement à environ 80°C pour déposer un agent hydrophobe à chaud par pulvérisation. L'ensemble de l'empilement subit un traitement thermique à 150°C durant 30 minutes, afin de parfaire la densification des deux couches.

La durée totale du procédé pour une lame de 80 mm de diamètre est d'une demi-heure environ.

Les meilleurs résultats sont obtenus avec la solution de $SiO_2$ de type oligomérique, avec laquelle le revêtement bicouche, recouvert de l'agent hydrophobe T2494, résiste pratiquement au test à l'abrasion "sévère" de la norme US-MIL-C-0675C qui n'entraîne que de légères frayures sur l'antireflet.

En comparaison, les essais avec les couches de $SiO_2$ polymérique en milieu HCl ou $HNO_3$ donnent des revêtements légèrement plus fragiles à l'abrasion, les propriétés mécaniques étant comparables avec celles obtenues par un procédé de fabrication faisant appel uniquement aux traitements thermiques comme moyen de densification.

Dans le cas de la solution de $SiO_2$ oligomérique, le précurseur, couplé à l'action des U.V. permet d'établir une forte interaction entre la couche de silice et celle haut indice de $Ta_2O_5$, et ainsi garantir une bonne tenue mécanique.

La dose d'insolation UV semble jouer un rôle important puisque quand cette dernière diminue au niveau des couches à bases de $Ta_2O_5$ et de $SiO_2$, la tenue à l'abrasion du revêtement peut être affectée.

Par ailleurs, le passage aux U.V. de la couche d'agent hydrophobe T2494 n'améliore pas les propriétés mécaniques du bicouche.

<u>EXEMPLE 2</u>

Cet exemple illustre le second mode de réalisation du procédé selon l'invention.

C'est-à-dire qu'il décrit la réalisation d'un matériau optique antireflet formé d'un empilement tricouche, avec insolation aux UV sur chacune des couches déposées.

Les solutions traitantes utilisées sont les suivantes : $TaCl_5$-$Si(OEt)_4$/EtOH pour la couche moyen indice, $TaCl_2(OEt)_3$/EtOH-$NH_3$ pour la couche haut indice, $SiO_2$ polymérique HCl, $SiO_2$ polymérique $HNO_3$ ou $SiO_2$ oligomérique pour la couche faible indice. On commence par nettoyer minutieusement un substrat d'un diamètre de 80 mm réalisé en verre silicate, puis on dépose sur le substrat nettoyé la couche moyen indice $Ta_2O_5$-$SiO_2$ (80/20) et on la densifie sous UV à pleine puissance (c'est-à-dire avec une puissance de 350 $mW/cm^2$), puis on refroidit le substrat pendant 3 minutes environ avec assistance d'un jet d'air sous pression, et on dépose ensuite la couche fort indice $Ta_2O_5$ et on la densifie sous UV dans les mêmes conditions. On réalise ensuite le dépôt de la couche bas indice $SiO_2$ et on l'insole aux UV avec une dose de l'ordre de 250 $mW/cm^2$.

On profite de l'échauffement de la surface du revêtement à environ 80°C pour déposer un agent hydrophobe à chaud par pulvérisation.

L'ensemble de l'empilement subit un traitement thermique à 150°C durant 30 minutes, afin de parfaire la densification des trois couches. La durée totale du procédé pour une lame de 80 mm de diamètre est d'une heure environ.

Les meilleurs résultats sont obtenus avec la solution de $SiO_2$ de type oligomérique, avec laquelle le revêtement tricouche, recouvert de l'agent hydrophobe T2494, résiste pratiquement au test à l'abrasion « sévère » de la

norme US-MIL-C-0675C qui n'entraîne qu'une légère décoloration de l'antireflet.

En comparaison, les essais avec les couches de $SiO_2$ polymérique en milieu HCl ou $HNO_3$ donnent des revêtements légèrement plus fragiles à l'abrasion, les propriétés mécaniques étant comparables avec celles obtenues par un procédé de fabrication faisant appel uniquement aux traitements thermiques comme moyen de densification. Dans le cas de la solution de $SiO_2$ oligomérique, le précurseur, couplé à l'action des U.V. permet d'établir une forte interaction entre la couche de silice et celle haut indice de $Ta_2O_5$, et ainsi garantir une bonne tenue mécanique.

La dose d'insolation UV semble jouer un rôle important puisque quand ce dernier diminue au niveau des couches à bases de $Ta_2O_5$ et de $SiO_2$, la tenue à l'abrasion du revêtement peut être affectée. Par ailleurs, le passage aux U.V. de la couche d'agent hydrophobe T2494 n'améliore pas les propriétés mécaniques du tricouche.

**Revendications**

1. Procédé de préparation d'un matériau optique par dépôt sur un substrat d'au moins deux couches de matériau polymérique inorganique à base d'au moins un oxyde de métal ou de métalloïde, caractérisé en ce que les couches sont déposées à partir de solutions de précurseur(s) n'ayant pas subi de photoirradiation et en ce que les couches déposées sont densifiéesréticulées à température ambiante par une insolation aux rayons ultraviolets.

2. Procédé selon la revendication 1 caractérisé en ce que ledit oxyde de métal ou de métalloïde est choisi parmi l'oxyde de tantale, l'oxyde de titane, l'oxyde d'yttrium, l'oxyde de scandium, l'oxyde de zirconium, l'oxyde de hafnium, l'oxyde de thorium, l'oxyde de niobium, l'oxyde de lanthane, l'oxyde d'aluminium, l'oxyde de silicium et l'oxyde de magnésium.

3. Procédé selon la revendication 1 caractérisé en ce que la réticulation-densification par insolation aux rayons ultraviolets est réalisée à l'issue du dépôt de chacune des couches de matériau polymérique inorganique.

4. Procédé selon la revendication 1 caractérisé en ce que la réticulation-densification par insolation aux rayons ultraviolets est réalisée sur l'ensemble des couches déposées.

5. Procédé selon la revendication 1 caractérisé en ce que ladite insolation aux rayons ultraviolets est réalisée avec une énergie de 5 à 10 $J/cm^2$ pendant une durée de 10 sec. à 10 min.

6. Procédé selon la revendication 1 caractérisé en ce que à l'issue de la densification-réticulation par insolation aux rayons ultraviolets on effectue un traitement thermique ou de recuit final.

7. Procédé selon la revendication 6 caractérisé en ce que le traitement thermique ou de recuit final est réalisé à une température de 80 à 200°C pendant 10 à 60 minutes.

8. Procédé selon la revendication 1 caractérisé en ce que chaque couche de matériau polymérique inorganique à base d'au moins un oxyde de métal ou de métalloïde est préparée et déposée par les étapes consistant à :

   - préparer une solution (1) dans un solvant (3) comprenant un composé moléculaire à base de métal ou de métalloïde, appelé encore précurseur moléculaire de métal ou de métalloïde ;
   - éventuellement, mélanger ladite solution (1) avec une ou plusieurs solution(s) dans un solvant de même nature comprenant un ou plusieurs composé(s) de métal ou de métalloïde dont le métal ou métalloïde est différent du métal ou métalloïde du composé de métal ou de métalloïde de la solution (1) ; ou
     ajouter le ou lesdits composé(s) de métal ou de métalloïde à ladite solution (1) ; moyennant quoi on obtient une solution (2) ;
   - déposer la solution (1) ou (2) obtenue sur un support pour former une couche uniforme de matériau polymérique.

9. Procédé selon la revendication 8 caractérisé en ce que le solvant ou les solvants est (sont) choisi(s) parmi ces alcools aliphatiques saturés de formule ROH, où R représente un groupe alkyle de 1 à 5 atomes de carbone.

10. Procédé selon la revendication 8 caractérisé en ce que le ou lesdits précurseur(s) est (sont) choisi(s) parmi les alcoxydes, halogènures, et autres sels de métal ou de métalloïde.

11. Procédé selon la revendication 8 caractérisé en ce que ledit précurseur est choisi parmi les pentahalogénures de

tantale $TaX_5$ avec X = F, Br, I, Cl.

**12.** Procédé selon la revendication 1 caractérisé en ce que suite au dernier traitement par insolation aux ultraviolets, on effectue le dépôt d'une couche antiabrasive à base de silane fluoré.

**13.** Procédé selon la revendication 1 caractérisé en ce qu'au moins une des couches déposées est une couche de matériau polymérique à indice de réfraction élevé.

**14.** Procédé selon la revendication 13 caractérisé en ce qu'au moins une autre couche déposée est choisie en outre parmi :

- une couche polymérique densifiée-réticulée à faible indice de réfraction,
- une couche polymérique densifiée-réticulée à indice de réfraction moyen,
- une couche antiabrasive à base de silane fluoré.

**15.** Procédé selon la revendication 14 de préparation d'un matériau optique présentant des propriétés antireflet à large bande spectrale, caractérisé en ce qu'il comprend successivement le dépôt sur un substrat de nature organique ou inorganique de :

- une couche à indice de réfraction moyen ;
- une couche à indice de réfraction élevé ;
- une couche à faible indice de réfraction ;
- éventuellement, une couche antiabrasive.

**16.** Procédé selon la revendication 14 de préparation d'un matériau optique, présentant des propriétés antireflet à bande spectrale étroite, caractérisé en ce qu'il comprend successivement le dépôt sur un substrat de nature inorganique, ou organique de :

- une couche à indice de réfraction élevé ;
- une couche à faible indice de réfraction ;
- éventuellement, une couche antiabrasive.

**17.** Procédé selon la revendication 14 de préparation d'un matériau optique, présentant des propriétés réfléchissantes, caractérisé en ce qu'il comprend successivement le dépôt sur un substrat de nature organique, ou inorganique, d'au moins une séquence de deux couches comprenant :

- une couche à faible indice de réfraction ;
- une couche à indice de réfraction élevé ;
- éventuellement, une couche antiabrasive.

**18.** Procédé selon la revendication 13 caractérisé en ce que la couche à indice de réfraction élevée est une couche polymérique à base d'oxyde de tantale.

**19.** Procédé selon la revendication 14, 15, 16, ou 17 caractérisé en ce que la couche à indice de réfraction moyen est formée d'un matériau polymérique à base d'oxyde de tantale et d'oxyde de silicium ou d'oxyde de magnésium, les proportions relatives en équivalent oxyde de tantale et oxyde de silicium ou oxyde de magnésium, $Ta_2O_5/SiO_2$ ou $Ta_2O_5/MgO$, pouvant varier de 0/100 à 100/0, moyennant quoi, on module à volonté l'indice de réfraction de la couche polymérique obtenue.

**20.** Procédé selon la revendication 14, 15, 16, ou 17, caractérisé en ce que la couche à faible indice de réfraction est une couche formée de silice polymérique choisie parmi la silice polymérique préparée en milieu HCl, la silice polymérique préparée en milieu $HNO_3$ et la silice oligomérique.

**21.** Procédé optique selon la revendication 14, 15, 16, ou 17 caractérisée en ce que la couche antiabrasive est formée à partir de $C_6F_{13}$ - $CH_2CH_2$ - $Si(OEt)_3$ ou de $C_6F_{13}$ - $CH_2CH_2$ -$SiCl_3$.

**22.** Procédé selon la revendication 15 de préparation d'un matériau antireflet à large bande spectrale, caractérisé en ce qu'il comprend les étapes suivantes :

- nettoyage-décapage du substrat ;
- dépôt sur le substrat nettoyé de la couche à indice de réfraction moyen ;
- densification-réticulation de la couche à indice de réfraction moyen déposée, par insolation aux rayons ultraviolets ;
- dépôt de la couche à indice de réfraction élevé ;
- densification-réticulation de la couche à indice de réfraction élevé déposée, par insolation aux rayons ultraviolets ;
- dépôt de la couche à faible indice de réfraction ;
- densification-réticulation de la couche à faible indice de réfraction déposée, par insolation aux rayons ultraviolets ;
- application de la couche antiabrasive sur la couche à faible indice ;
- traitement thermique de l'ensemble des couches appliquées et du substrat.

**23.** Matériau optique caractérisé en ce qu'il peut être préparé par le procédé selon l'une quelconque des revendications 1 à 22.

**Patentansprüche**

**1.** Verfahren zur Herstellung eines optischen Materials durch Aufbringen von wenigstens zwei Schichten eines anorganischen polymeren Materials auf der Basis wenigstens eines Metall- oder Nichtmetalloxids auf ein Substrat, **dadurch gekennzeichnet,** dass die aufgebrachten Schichten aus Zwischenstoff-Lösungen sind, die keiner Photoirridation ausgesetzt waren, und dadurch, dass die abgeschiedenen Schichten bei Umgebungstemperatur einer UV-Verdichtungs-Vernetzungsbestrahlung unterzogen werden.

**2.** Verfahren nach Anspruch 1, dadurch gekennzeichnet, dass das genannte Metall- oder Nichtmetalloxid ausgewählt wird unter Tantaloxid, Titanoxid, Yttriumoxid, Scandiumoxid, Zirkonoxid, Hafniumoxid, Thoriumoxid, Niobiumoxid, Lanthanoxid, Aluminiumoxid, Siliciumoxid und Magnesiumoxid.

**3.** Verfahren nach Anspruch 1, dadurch gekennzeichnet, dass jede der anorganischen polymeren Schichten am Ende ihres Aufbringens der UV-Vernetzungs-Verdichtungsbestrahlung unterzogen wird.

**4.** Verfahren nach Anspruch 1, dadurch gekennzeichnet, dass alle aufgebrachten Schichten zusammen der UV-Vemetzungs-Verdichtungsbestrahlung unterzogen werden.

**5.** Verfahren nach Anspruch 1, dadurch gekennzeichnet, dass die UV-Bestrahlung während 10 Sekunden bis 10 Minuten mit einer Energie von 5 bis 10 $J/cm^2$ durchgeführt wird.

**6.** Verfahren nach Anspruch 1, dadurch gekennzeichnet, dass man am Ende der UV-Verdichtungs-Vernetzungsbestrahlung eine abschließende Wärme- oder Temperbehandlung durchführt.

**7.** Verfahren nach Anspruch 6, dadurch gekennzeichnet, dass die abschließende Wärme- oder Temperbehandlung während 10 bis 60 Minuten bei einer Temperatur von 80 bis 200°C durchgeführt wird.

**8.** Verfahren nach Anspruch 1, dadurch gekennzeichnet, dass jede Schicht aus anorganischem polymerem Material auf der Basis wenigstens eines Metall- oder Nichtmetalloxids durch folgende Schritte vorbereitet und abgeschieden wird:

- Vorbereiten einer Lösung (1) in einem Lösungsmittel (3) mit einer Molekular- bzw. Molekülbindung auf der Basis von Metall oder Nichtmetall, auch molekularer Metall- oder Nichtmetallzwischenstoff genannt;
- eventuell die genannte Lösung (1) mit einer oder mehreren Lösungen, die eine oder mehrere Metall- oder Nichtmetallverbindungen umfassen, in einem Lösungsmittel derselben Art mischen, wobei das Metall oder Nichtmetall sich von dem Metall oder Nichtmetall der Metall- oder Nichtmetallverbindung der Lösung (1) unterscheidet; oder
- die genannte(n) Metall- oder Nichtmetallverbindung(en) der genannten Lösung (1) beimischen, um eine Lösung (2) zu erhalten;
- Aufbringen der erhaltenen Lösung (1) oder (2) auf einen Träger, wobei man eine gleichförmige Schicht aus polymerem Material bildet.

**9.** Verfahren nach Anspruch 8, dadurch gekennzeichnet, dass das oder die Lösungsmittel ausgewählt werden unter den gesättigten alipathischen Alkoholen der Formel ROH, wo R eine Alkylgruppe mit 1 bis 5 Kohlenstoffen darstellt.

**10.** Verfahren nach Anspruch 8, dadurch gekennzeichnet, dass der oder die Zwischenstoffe ausgewählt werden unter den Alkoxiden, Haloiden und anderen Metall- oder Nichtmetallsalzen.

**11.** Verfahren nach Anspruch 8, dadurch gekennzeichnet, dass der genannte Zwischenstoff ausgewählt wird unter den Tantal-Pentahaloiden $TaX_5$ mit X = F, Br, I, Cl.

**12.** Verfahren nach Anspruch 1, dadurch gekennzeichnet, dass man nach der letzten UV-Strahlenbehandlung eine antiabrasive Schicht auf der Basis von fluoriertem Silan aufträgt.

**13.** Verfahren nach Anspruch 1, dadurch gekennzeichnet, dass wenigstens eine der aufgetragenen Schichten eine Schicht aus polymerem Material mit hoher Brechzahl ist.

**14.** Verfahren nach Anspruch 13, dadurch gekennzeichnet, dass wenigstens eine andere aufgetragene Schicht ausgewählt wird unter:

- einer Verdichtung-Vernetzung unterzogenen Polymerschicht mit niedriger Brechzahl,
- einer Verdichtung-Vernetzung unterzogenen Polymerschicht mit mittlerer Brechzahl,
- einer antiabrasive Schicht auf der Basis von fluoriertem Silan.

**15.** Verfahren nach Anspruch 14 zur Herstellung eines Antireflexeigenschaften aufweisenden optischen Materials mit breitem Spektralband, dadurch gekennzeichnet, dass man nacheinander auf ein Substrat organischer oder anorganischer Art folgende Schichten aufträgt:

- eine Schicht mit mittlerer Brechzahl;
- eine Schicht mit hoher Brechzahl;
- eine Schicht mit niedriger Brechzahl;
- eventuell eine antiabrasive Schicht.

**16.** Verfahren nach Anspruch 14 zur Herstellung eines Antireflexeigenschaften aufweisenden optischen Materials mit schmalem Spektralband, dadurch gekennzeichnet, dass man nacheinander auf ein Substrat anorganischer oder organischer Art folgende Schichten aufträgt:

- eine Schicht mit hoher Brechzahl;
- eine Schicht mit niedriger Brechzahl;
- eventuell eine antiabrasive Schicht.

**17.** Verfahren nach Anspruch 14 zur Herstellung eines Antireflexeigenschaften aufweisenden optischen Materials, dadurch gekennzeichnet, dass man nacheinander auf ein Substrat organischer oder anorganischer Art wenigstens eine Folge von zwei Schichten aufträgt, umfassend:

- eine Schicht mit niedriger Brechzahl;
- eine Schicht mit hoher Brechzahl;
- eventuell eine antiabrasive Schicht.

**18.** Verfahren nach Anspruch 13, dadurch gekennzeichnet, dass die Schicht mit hoher Brechzahl eine Polymerschicht auf Tantaloxid-Basis ist.

**19.** Verfahren nach Anspruch 14, 15, 16 oder 17, dadurch gekennzeichnet, dass die Schicht mit mittlerer Brechzahl durch ein polymeres Material auf der Basis von Tantaloxid und Siliciumoxid oder Magnesiumoxid gebildet wird, wobei die jeweiligen Äquivalentverhältnisse von Tantaloxid und Siliciumoxid oder Magnesiumoxid, $Ta_2O_5/SiO_2$ oder $Ta_2O_5/MgO$, von 0/100 bis 100/0 variieren können, was ermöglicht, nach Belieben die Brechzahl der hergestellten Polymerschicht anzupassen.

**20.** Verfahren nach Anspruch 14, 15, 16 oder 17, dadurch gekennzeichnet, dass die Schicht mit niedriger Brechzahl eine aus polymerem Siliciumoxid gebildete Schicht ist, das ausgewählt wird unter dem im HCL-Milieu hergestellten

Siliciumoxid, dem im $HNO_3$-Milieu hergestellten polymeren Siliciumoxid und dem oligomeren Siliciumoxid.

**21.** Optisches Verfahren nach Anspruch 14, 15, 16 oder 17, dadurch gekennzeichnet, dass die antiabrasive Schicht aus $C_6F_{13}$ - $CH_2CH_2$ - $Si(OEt)_3$ oder $C_6F_{13}$ - $CH_2CH_2$ - $SiCl_3$ gebildet wird.

**22.** Verfahren nach Anspruch 15 zur Herstellung eines Antireflexmaterials mit breitem Spektralband, dadurch gekennzeichnet, dass es die folgenden Schritte umfasst:

- Reinigen-Anätzen des Substrats;
- Auftragen der Schicht mit mittlerer Brechzahl auf das gereinigte Substrat;
- UV-Verdichtungs-Vernetzungsbestrahlung der aufgetragenen Schicht mittlerer Brechzahl;
- Auftragen der Schicht mit hoher Brechzahl;
- UV-Verdichtungs-Vernetzungsbestrahlung der aufgetragenen Schicht hoher Brechzahl;
- Auftragen der Schicht mit niedriger Brechzahl;
- UV-Verdichtungs-Vernetzungsbestrahlung der aufgetragenen Schicht niedriger Brechzahl;
- Anbringen der antiabrasiven Schicht auf der Schicht mit niedriger Brechzahl;
- Thermische Behandlung der Gesamtheit der aufgetragenen Schichten und des Substrats.

**23.** Optisches Material, dadurch gekennzeichnet, dass es entsprechend dem Verfahren nach einem der Ansprüche 1 bis 22 hergestellt wird.

## Claims

**1.** Method for preparing an optic material by depositing on a substrate at least two layers of inorganic polymeric material, containing at least one metal oxide or metalloid oxide, characterized in that the layers are deposited from precursor solution(s) which have not undergone photo-irradiation, and in that the deposited layers are densified/cross-linked at ambient temperature by exposure to ultraviolet rays.

**2.** Method in accordance with claim 1 characterized in that said metal oxide or metalloid oxide is chosen from among tantalum oxide, titanium oxide, yttrium oxide, scandium oxide, zirconium oxide, hafnium oxide, thorium oxide, niobium oxide, lanthanum oxide, aluminium oxide, silicon oxide and magnesium oxide.

**3.** Method in accordance with claim 1, characterized in that cross-linking/densification by exposure to ultraviolet rays is conducted after depositing each of the layers of inorganic polymeric material.

**4.** Method in accordance with claim 1, characterized in that cross-linking/densification by exposure to ultraviolet rays is conducted on the assembly of deposited layers.

**5.** Method in accordance with claim 1, characterized in that said exposure to ultraviolet rays is conducted using an energy of 5 to 10 $J/cm^2$ for a period of 10 sec to 10 min.

**6.** Method in accordance with claim 1, characterized in that on completion of densifying/cross-linking by exposure to ultraviolet rays, heat treatment or final annealing is carried out.

**7.** Method in accordance with claim 6, characterized in that the heat treatment or final annealing is conducted at a temperature of 80 to 200°C for 10 to 60 minutes.

**8.** Method in accordance with claim 1, characterized in that each layer of inorganic polymeric material containing at least one metal oxide or metalloid oxide is prepared and deposited by the stages consisting of :

- preparing a solution (1) in a solvent (3) comprising a molecular compound containing a metal or metalloid, also called a metal or metalloid molecular precursor ;
- pptionally, mixing said solution (1) with one or more solutions in a solvent of same type comprising one or more metal or metalloid compounds whose metal or metalloid is different to the metal or metalloid of the metal or metalloid compound of solution (1) ; or

  adding said metal or metalloid compound(s) to said solution (1) ; after which a solution (2) is obtained ;
- depositing solution (1) or (2) that is obtained on a support to form a uniform layer of polymeric material.

**9.** Method in accordance with claim 8, characterized in that the solvent or solvents is (are) chosen from among the saturated aliphatic alcohols with the formula ROH, in which R represents an alkyl group with 1 to 5 carbon atoms.

**10.** Method in accordance with claim 8, characterized in that the said precursor(s) is (are) chosen from among alkoxides, halides and other metal or metalloid salts.

**11.** Method in accordance with claim 8, characterized in that said precursor is chosen from among pentahalides of tantalum $TaX_5$ where X = F, Br, I, Cl.

**12.** Method in accordance with claim 1, characterized in that after the last treatment by ultraviolet exposure, an antiabrasive layer containing a fluoride silane is deposited.

**13.** Method in accordance with claim 1, characterized in that at least one of the deposited layers is a layer of polymeric material having a high refractive index.

**14.** Method in accordance with claim 13, characterized in that at least one other deposited layer is chosen in addition from among :

- a densified/cross-linked polymeric layer having a low refractive index,
- a densified/cross-linked polymeric layer having an average refractive index,
- an antiabrasive layer containing a fluoride silane.

**15.** Method in accordance with claim 14 for preparing an optic material having wide spectral band antireflective properties, characterized in that it successively entails depositing on a substrate of organic or inorganic type :

- a layer with an average refractive index,
- a layer with a high refractive index,
- a layer with a low refractive index;
- optionally, an antiabrasive layer.

**16.** Method in accordance with claim 14 for preparing an optic material having narrow spectral band antireflective properties, characterized in that it successively entails depositing on a substrate of inorganic or organic type :

- a layer with a high refractive index
- a layer with a low refractive index ;
- optionally, an antiabrasive layer.

**17.** Method in accordance with claim 14 for preparing an optic material having reflective properties, characterized in that it successively entails depositing on a substrate of organic or inorganic type at least one sequence of two layers comprising :

- a layer with a low refractive index ;
- a layer with a high refractive index ;
- optionally, an antiabrasive layer.

**18.** Method in accordance with claim 13, characterized in that the layer with a high refractive index is a polymeric layer containing tantalum oxide.

**19.** Method in accordance with claim 14, 15, 16 or 17, characterized in that the layer with an average refractive index

is formed of a polymeric material containing tantalum oxide and silicon oxide or magnesium oxide, the relative proportions in tantalum oxide and silicon oxide or magnesium oxide equivalent, $Ta_2O_5/SiO_2$ or $Ta_2O_5/MgO$, being variable from 0/100 to 100/0, subsequent to which the refractive index of the polymeric layer obtained can be modulated at will.

**20.** Method in accordance with claim 14, 15, 16 or 17, characterized in that the layer with a low refractive index is a layer formed of polymeric silica chosen from among polymeric silica prepared in HCl medium, polymeric silica prepared in $HNO_3$ medium and oligomeric silica.

**21.** Optic process in accordance with claim 14, 15, 16 or 17 characterized in that the antiabrasive later is formed from $C_6F_{13}$ - $CH_2CH_2$ - $Si(OEt)_3$ or from $C_6F_{13}$ - $CH_2CH_2$ - $SiCl_3$.

**22.** Method in accordance with claim 15 for preparing a wide spectral band antireflective material, characterized in that it comprises the following stages

- cleaning-stripping of the substrate ;
- depositing on the cleaned substrate the layer having an average refractive index ;
- densifying/cross-linking the deposited layer having an average refractive index by exposure to ultraviolet rays.
- depositing the layer with a high refractive index ;
- densifying/cross-linking the deposited layer having a high refractive index by exposure to ultraviolet rays ;
- depositing the layer having a low refractive index ;
- densifying/cross-linking the deposited low refractive index layer by exposure to ultraviolet rays ;
- applying the antiabrasive layer to the low index layer ;
- heat treatment of the assembly of applied layers and the substrate.

**23.** Optic material characterized in that it may be prepared using the method of any one of claims 1 to 22.